# EUROPÄISCHE PATENTANMELDUNG

(11) **EP 0 582 041 A1**
(43) Veröffentlichungstag der Anmeldung: **09.02.1994**
(21) Anmeldenummer: 93106600.5
(22) Anmeldetag: 23.04.1993
(51) Int. Cl.: A62C 13/64, F16K 31/56

(54) **Schnellöffnungsventil**

(30) Priorität: 06.08.1992 DE 4225997
(71) Anmelder: Total Walther Feuerschutz GmbH, D-51069 Köln (DE)
(72) Erfinder: Schröder, Lothar, W-5067 Kürten (DE)

(57) **Zusammenfassung**

Die Erfindung betrifft ein Schnellöffnungsventil für Feuerlöschanlagen, insbesondere für Hochdruckgasflaschen, wobei eine Arretiervorrichtung mit einer Sperreinrichtung arretiert ist, die mittels eines Druckgasgenerators mit elektrischer Zündung entsperrt wird.

## Beschreibung

Die Erfindung betrifft ein Schnellöffnungsventil für Feuerlöschanlagen, insbesondere für HRD (High Rate Discharge)-Löschanlagen, wobei das Schnellöffnungsventil mit seinem Ventilegehäuse auf einen Hochdruckbehälter, insbesondere auf den Hals einer Hochdruckflasche aufschraubbar ist, und der Ventilteller mit seiner Ventilstange mittels einer Verschraubung gegen den Ventilsitz angedrückt und mittels einer Arretiereinrichtung in Sperrposition gehalten ist, und die Arretiereinrichtung von einer elektrisch aktivierbaren Druckquelle verschoben wird.

Bei derartigen Ventilen wird eine mit Sprengstoff gefüllte Scherkapsel verwendet. Zur Abdichtung des Druckgasbehälters wird über ein eingespanntes Stützröhrchen der Ventilteller gegen die Dichtfläche des Druckgasbehälters gepreßt. Bei Auslösung des Ventils wird die Scherkapsel elektrisch gezündet und sprengt dad Stützröhrchen. Die Abstützung da Ventiltellers wird aufgehoben und das Ventil öffnet über den Löschmitteldruck.

Der Nachteil der bekannten Ventile ist in der Verwendung des Sprengstoffes zu sehen. Die mit Sprengstoff gefüllte Scherkapsel unterliegt - bedingt durch ihre Zusammensetzung - dem Deutschen Sprengstoffgesetz mit all seinen Auflagen. Z.B.: besondere externe Schulung der Mitarbeiter zum Umgang mit Sprengstoff und zur Erlangung eines Sprengstoff-Befähigungsscheines. Für den Transport auf der Straße ist ein besonderer Führerschein erforderlich. Bahn- und Flugversand erfordert besondere - bauartgeprüfte - Verpackungen. Im Werk ist nur eine Sonderlagerung in einem Spezialbunker möglich. Besondere Entsorgung in Verbindung mit dem Hersteller der Scherkapseln muß gewährleistet sein.

Der Erfindung leigt die Aufgabe zugrunde bei der Öffnung eines Ventiles die Vorteile einer elektrischen Zündung zu nutzen und die Verwendung eines Sprengstoffes zu vermeiden.

Diese Aufgabe wird dadurch gelöst, daß die im Ventilgehäuse verschiebbare Ventilstange mit einer in einer Schraubbuchse angeordneten Rohrbusche verlängert ist, die von einer Arretiervorrichtung mit Sperreinrichtung arretiert ist, die mittels eines Druckgasgenerators mit elektrischer Zündung dadurch verschoben wird, daß bei Zündung das Volumen des Inhalts des Druckgasgenerators vergrößert wird und auf die Sperreinrichtung wirkt.

Mit dieser Maßnahme wird die an sich bekannte mit Sprengstoff gefüllte Scherkapsel durch einen Druckgasgenerator ersetzt, der mit gasreichen Zündstoff gefüllt ist. Da der Druckgasgenerator jedoch nicht die Intensität einer Scherkapsel hat, erfolgt die Abstützung des Ventiltellers über eine mechanische Verriegelung, die durch den Druckaufbau des gezündeten Druckgasgenerators entriegelt wird. Außerdem werden die Nachteile vermieden, die sich durch eine Verwendung eines Sprengstoffes ergeben.

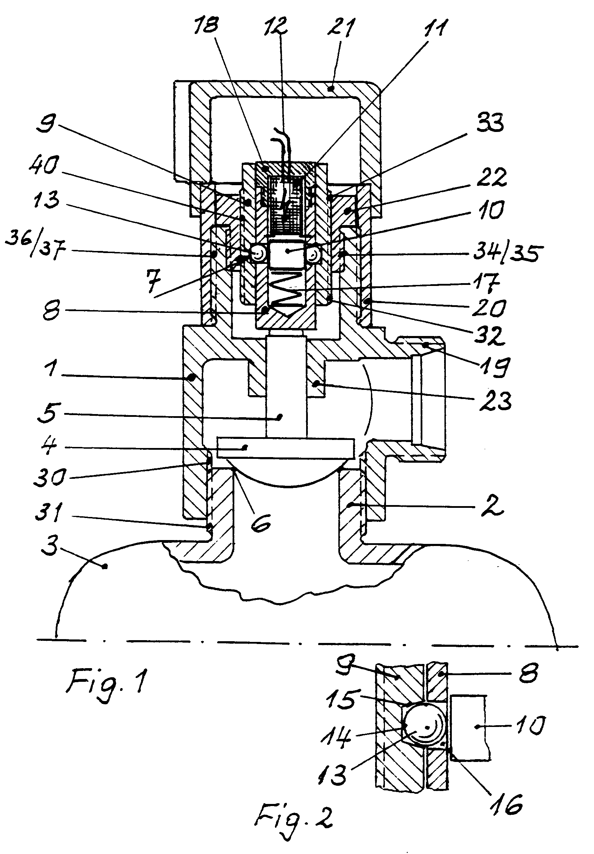

Die Erfindung einschließlich weiterer Erfindungsgedanken, sind in einer Zeichnung dargestellt und werden nachfolgend anhand der Figuren 1 bis 5 näher beschrieben.

Fig. 1 zeigt ein Schnellöffnungsventil mit einem Ventilgehäuse 1, das mittels Gewinde 30 in ein Gewinde 31 eines Behälterhalses 2, eines Behälters 3 eingeschraubt ist. Dieser Behälter 3 kann ein unter Hochdruck stehender Löschmittlebehälter oder eine Hochdruckgasflasche sein. Der Hals 2 ist mit einem Ventilsitz 6 ausgebildet, auf den ein Ventilteller 4 mittels einer Ventilstange 5 abdichtend aufgedrückt wird. Der Ventilsitz kann auch innerhalb des Ventilgehäuses 1 vorgesehen sein. Damit der aus dem Behälter 3 auf den Ventilteller 4 wirkende Druck den Ventilteller nicht abhebt, muß eine Druck- und eine Sperrvorrichtung vorgesehen werden. Die in der Ventilstangenführung 23 geführte Ventilstange 5 ist im oberen Teil mittels einer Rohrbuchse 8 verlängert und gleichzeitig in einer Schraubbuchse 9 gleitend gelagert, wobei die Schraubbuchse 9 mittels eines Außengewindes 33 in einem Innengewinde 40 eines Zwischenstückes 22 eingeschraubt ist. Dieses Zwischenstück ist wiederum mittels Gewinde 34/35 in das Ventilgehäuse 1 eingeschraubt. Die Schraubbuchse 9 kann auch direkt in das Ventilgehäuse 1 eingeschraubt werden. Das Zwischenstück 22 ist vorgesehen, damit die Erfindung auch bei vorhandenen Ventilen nachträglich eingebaut werden kann. Damit die Schraubbuchse 9 einen axialen Druck auf den Ventilteller 4 ausüben kann, muß die Rohrbuchse 8 mit einer Arretiervorrichtung 7 arretiert werden. Als Arretiervorrichtung sind zwei oder mehr Kugeln 13 vorgesehen, die sowohl in Bohrungen 16 der Rohrbuchse 8, als auch in einem Ringkanal 14 der Schraubbuchse 9 gelagert sind. Damit die Kugeln gesperrt sind, ist als Sperreinrichtung ein Kolben 10 vorgesehen, der mittels einer Feder 17 in der Sperrposition gehalten ist. Jetzt kann über die Schraubbuchse 9 der Ventilteller 4 dichtend auf den Ventilsitz 6 gedrückt werden. Zum Öffnen des Ventiles ist ein Druckgasgenerator 11 mit einer elekrischen Zündeinrichtung 12 innerhalb der Rohrbuschse 8 vorgesehen und mittels eines Schraubverschlusses 18 befestigt. Bei Zündung des Druckgsgenerators 11 wird das darin befindliche Volumen derart vergößert, daß es den Druckgasgenerator öffnet und einen Druck auf den Kolben 10 ausübt, dabei die Kraft der Feder 17 überwindet und den Kolben nach unten drückt. Damit rutschen die Kugeln 13 in das Innere der Rohrbuchse 8, geben die Arretierung frei, so daß der aus dem Behälter 3 auf den Ventilteller 4 ausübende Druck diesen mit der Rohrbuchse 8 nach oben schiebt und somit das Ventil öffnet. Damit die Kugeln 13 ihre Sperrwirkung mit Sicherheit aufgeben, ist der Ringkanal 14 im oberen Bereich mit einer Schräge 15 versehen. Wenn der Kolben 10 nach unten gedrückt ist und damit die Kugeln 13 freigibt, kommt von unten mittels der Wand der Rohrbuchse 8 ein Druck auf die Kugeln, die sich dann an der schrägen Fläche 15 nach innen schieben und ihre Sperrwirkung aufgeben. Sobald der Ventilteller 4 angehoben ist, kann das unter Druck stehende Löschmedium über den Ventilstutzen 19 abströmen. Im Ausführungsbeispiel ist ein Übergangsstück 20 mit Innengewinde 36 auf ein Außengewinde 37 des Ventilgehäuses 1 aufgeschraubt. Mittels einer Ventilkappe 21 ist das Ventil nach oben verschlossen. Das Übergangsstück 20 mit der Ventilkappe 21 ist vorgesehen, um die Erfindung bei vorhandenen Ventilen einbauen zu können.

Die Erfindung ist nicht an das in Fig. 1 dargestellte Ausführungsbeispiel gebunden. So ist es ohne weiteres denkbar zum Öffnen des Ventils den Kolben 10 auch mechanisch zu entriegeln, z.B. mittels einer Zug- oder Druckstange.

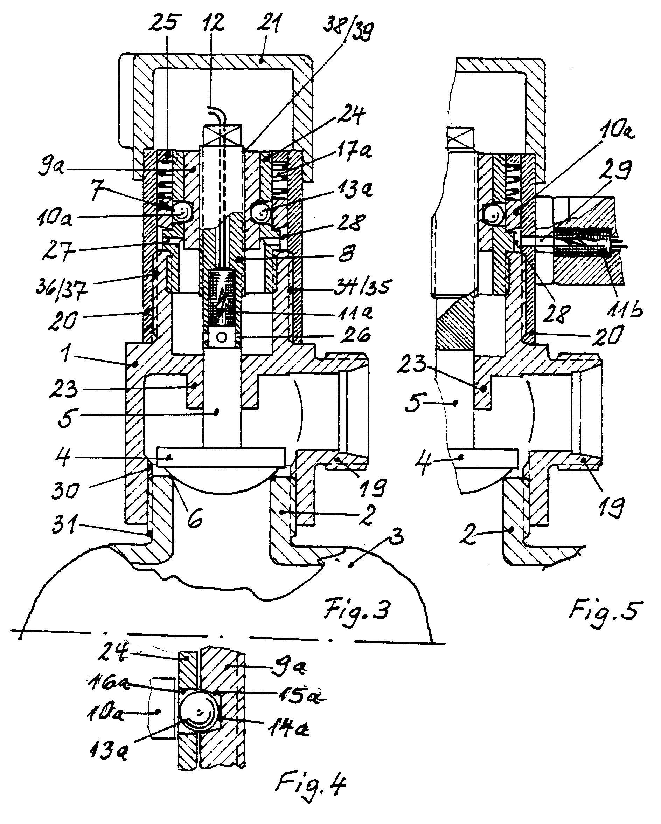

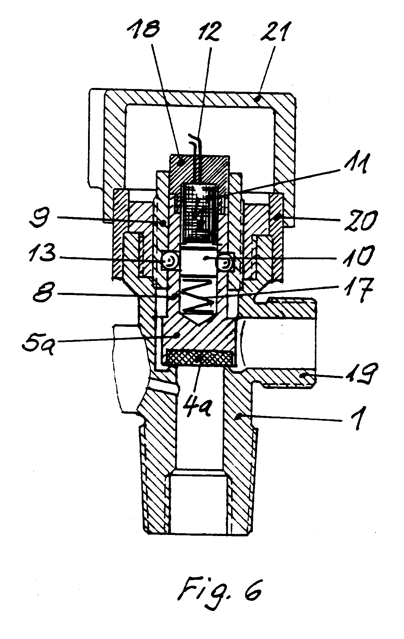

Fig. 3 zeigt eine weitere Ausgestaltung der Erfindung. Hier ist die Rohrbuchse 8 mittels eines Außengewindes 38 in das Innengewinde 39 der Schraubbuchse 9a eingeschraubt, wobei die Schraubbuchse 9a gleitend in einem als Zwischenstück ausgebildeten Zylinder 24 geführt, und der Zylinder 24 mittels eines Außengewindes 34 im Innengewinde 35 des Ventilgehäuses 1 eingeschraubt ist. Die die Arretiervorrichtung bildenden Kugeln 13a sind in Bohrungen 16a des Zylinders 24 und in einem Ringkanal 14a der Schraubbuchse 9a gelagert und werden von einem Ringkolben 10a in einem Ringraum 28 gesperrt. Dabei wird der Ringkolben 10a mittels einer Stützfeder 17a in Sperrposition gehalten, wobei die Feder 17a von einem Flansch 25 gehalten ist. Unterhalb des Druckgasgenerators 11a sind Bohrungen 26 in der Rohrbuchse 8 und fernerhin Bohrugnen 27 in dem Zylinder 24 vorgesehen, die mit dem Ringkanal 28 in Verbindung stehen. Bei Zündung des Druckgasgenerators weitet sich das Volumen über die Bohrungen 26 und 27 aus und wirkt von unter auf den ringförmigen Kolben 10a und gibt damit die Sperrwirkung der Kugeln 13a frei. Auch hier ist der Ringkanal 14a mit einer oberen Schräge 15a versehen, damit die Kugeln mit Sicherheit ihre Sperrwirkung aufgeben.

Fig. 5 zeigt eine weitere Ausführungsform der Erfindung. Hier ist der Druckgasgenerator 11b an der Außenseite des Übergangsstückes 20 und damit außerhalb des Ventilgehäuses angebracht, sowie über eine Bohrung 29 mit dem Ringraum 28 verbunden. Bei Zündung des Druckgasgenerators 11b wirkt das vergrößerte Volumen direkt auf den Ringkolben 10a.

## Patentansprüche

1. Schnellöffnungsventil für Feuerlöschanlagen, insbesondere für HRD (High Rate Discharge)-Löschanlagen, wobei das Schnellöffnungsventil mit seinem Ventilgehäuse auf einen Hochdruckbehälter, insbesondere auf den Hals einer Hochdruckgasflasche aufschraubbar ist, und der Ventilteller mit seiner Ventilstange mittels einer Verschraubung gegen den Ventilsitz angedrückt und mittels einer Arretiereinrichtung in Sperrposition gehalten ist und die Arretiereinrichtung von einer elektrisch aktivierbaren Druckquelle verschoben wird, dadurch gekennzeichnet, daß die im Ventilgehäuse (1) verschiebbare Ventilstange (5) mit einer in einer Schraubbuchse (9) angeordneten Rohrbuchse (8) verlängert ist, die von einer Arretiervorrichtung mit Sperreinrichtung arretiert ist, die mittels eines Druckgasgenerators (11) mit elektrischer Zündung (12) dadurch verschoben wird, daß bei Zündung das Volumen des Inhalts des Druckgasgenerators (11) vergrößert wird und auf die Sperreinrichtung wirkt.

2. Schnellöffnungsventil nach Anspruch 1, dadurch gekennzeichnet, daß die Arretiervorrichtung (7) aus zwei oder mehreren in Ausnehmungen sitzenden Kugeln (13) gebildet ist, die von einer als Kolben (10) ausgebildeten Sperrvorrichtung arretiert sind.

3. Schnellöffnungsventil nach den Ansprüchen 1 und 2, dadurch gekennzeichnet, daß die Ausnehmungen aus Bohrungen (16) in der Rohrbuchse (8) und aus einem Ringkanal (14) in der mit dem Ventilgehäuse (1) verschraubten Schraubbuchse (9) bestehen, und der von einer Feder (17) gestützte Kolben (10) innerhalb der Rohrbuchse (8) sitzt.

4. Schnellöffnungsventil nach den Ansprüchen 1 bis 3, dadurch gekennzeichnet, daß der Druckgasgenerator (11) oberhalb des Kolbens (10) innerhalb der Rohrbuchse (8) angeordnet und von einem Schraubverschluß (18) gehalten ist.

5. Schnellöffnungsventil nach den Ansprüchen 1 bis 4, dadurch gekennzeichnet, daß die Schraubbuchse (9) in einem mit dem Ventilgehäuse (1) verschraubten Zwischenstück (22) eingeschraubt ist.

6. Schnellöffnungsventil nach den Ansprüchen 1 und 2, dadurch gekennzeichnet, daß die Schraubbuchse (9a) mit der Rohrbuchse (8) verschraubt und in einem mit dem Ventilgehäuse (1) verschraubten Zylinder (24) verschiebbar angeordnet ist, daß die Ausnehmungen aus Bohrungen (16a) in dem Zylinder (24) und einem Ringkanal (14a) in der Schraubbuchse (9a) bestehen und der Kolben als Ringkolben (10a) mit einer den Zylinder (24) umgebenden Stützfeder (17a) gebildet ist.

7. Schnellöffnungsventil nach Anspruch 6, dadurch gekennzeichnet, daß der innerhalb der Rohrbuchse (8) angeordnete Druckgasgenerator (11a) bei Zündung über Bohrungen (26) in der Rohrbuchse (8) und Bohrungen (27) in dem Zylinder (24) auf den Ringkolben (10a) wirksam wird.

8. Schnellöffnungsventil nach Anspruch 6, dadurch gekennzeichnet, daß der Druckgasgenerator (11b) an der Außenseite des Ventilgehäuses (1) angebracht und bei Zündung über eine Bohrung (29) im Ventilgehäuse (1) über den Ringraum (28) auf den Ringkolben (10a) wirksam wird.

9. Schnellöffnungsventil, nach den Ansprüchen 3 und 6, dadurch gekennzeichnet, daß die Ringkanäle (14 und 14a) in den Schraubbuchsen (9 und 9a) im oberen Bereich eine Schrägfläche (15/15a) aufweisen.
